(19) **Europäisches Patentamt**

**European Patent Office**

**Office européen des brevets**

(11) **EP 1 047 181 A1**

(12) **EUROPÄISCHE PATENTANMELDUNG**

(43) Veröffentlichungstag:
**25.10.2000 Patentblatt 2000/43**

(51) Int Cl.$^7$: **H02N 11/00**

(21) Anmeldenummer: **99107359.4**

(22) Anmeldetag: **21.04.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Schroll, Egidio**
**83368 St. Georgen (DE)**

(72) Erfinder: **Schroll, Egidio**
**83368 St. Georgen (DE)**

(54) **Neue Grundlage der Physik**

(57) Folgende Grundsätze erhalten ihre Gültigkeit:

- Ein Raum-Zeit-Element hat sechs Dimensionen bzw. Achsen.

- Die Zeit (*Machzeit*) hat zwei Dimensionen.

- Die Wirkung einer Kraft ist von absoluter Geschwindigkeit anhängig.

- Der Raum ist eine Konstante.

- Die Einheit "Energie" ist vom Menschen eingeführt worden.

- Energie liegt in der Natur nicht vor.

- Materie kann nicht vernichtet werden.

- Zeitachse 0.0 und 1.0 sind Zustände ohne Rückkehr.

- Die Nutzung des Materienvektor-Transfers als Informationstransfer.

## Diagramm 4

# Diagramm 7

**Beschreibung**

**Energie außerhalb der Materie gibt es nicht.**

Mechanische Energie
Thermische Energie
Strahlungs - Energie
Chemische Energie
Dynamische Energie

usw.

Die Behauptung, Energie außerhalb der Materie gibt es nicht, ist als Regel so nicht haltbar. Eine Energieerscheinung, die Strahlung, Entzieht sich dieser Regel.

Themawechsel .........

Die Zeit ist in kleinere Zeitabschnitte teilbar, die wiederum in noch kleinere Zeitabschnitte teilbar sind.

Wir fragen uns: "Ist die Zeit unendlich teilbar oder nicht '?"

Die Frage lassen wir vorerst unbeantwortet. Wir nehmen dafür die für uns kleinste vorstellbare Zeiteinheit.

Die nächste Frage lautet: "Ist in der kleinsten Zeiteinheit unendlich viel machbar oder ist die Machbarkeit hier begrenzt ?"

Die Antwort scheint nicht einfach zu sein. Die Antwort ist aber einfach.

Betrachten wir ein Beispiel: Wir nehmen einen Zeitabschnitt von 1 Sekunde und einen zweiten Zeitabschnitt von 2 Sekunden. Im zweiten Zeitabschnitt ist doppelt soviel machbar als im ersten. Wir folgern daraus: Die maximale Machbarkeit in einem Zeitabschnitt ist begrenzt.

Wäre dies nicht so, müßte in beiden Zeitgrößen gleich viel machbar sein, worauf die Machbarkeit in der Zeit unbegrenzt wäre.

Bei der Betrachtung des Raumes kommt man zum gleichen Ergebnis. Wir betrachten noch ein Beispiel :

Hier lautet die Frage: "Ist der Raum unendlich teilbar oder nicht ?"

Die Frage lassen wir zunächst noch unbeantwortet.

Wir nehmen dafür den uns kleinsten vorstellbaren Raum an und stellen die Frage: "Ist in der kleinsten Raumeinheit unendlich viel machbar oder ist die Machbarkeit dort begrenzt ?"

Die Antwort scheint nicht einfach zu sein. Die Antwort ist aber einfach.

Betrachten wir ein Beispiel: Wir haben einen Raum mit 1 Kubikmeter Größe und einen zweiten Raum mit 2 Kubikmeter Größe. Im zweiten Raum ist doppelt soviel machbar als im ersten. Es folgt daraus: Die maximale Machbarkeit im Raum ist begrenzt. Wäre dies nicht so, müßte in beiden Räumen gleich viel machbar sein, worauf die Machbarkeit in einem Raum unbegrenzt wäre.

Wir fügen jetzt die kleinste Raumeinheit und die kleinste Zeiteinheit zusammen. Wir erhalten somit ein Element, mit dem wir etwas anfangen können. Wir legen dabei fest: Die maximale Machbarkeit in der kleinsten Raumeinheit, behaftet mit der kleinsten Zeiteinheit, ist begrenzt.

Die Übertragung dieser Aussage auf einen größeren Raum und einen größeren Zeitabschnitt bleibt unverändert. In einem größeren Raum und einem größeren Zeitabschnitt ist entsprechend mehr machbar, was jedoch auch auf ein Maximum begrenzt ist.

Würden wir in unserem Element (kleinster Raum plus kleinster Zeitabschnitt) den Raum verdoppeln, verdoppelt sich auch die maximale Machbarkeit. Würden wir den Zeitabschnitt verdoppeln, verdoppelt sich die maximale Machbarkeit ebenso. Verdoppeln wir beide Elemente (Raum und Zeitabschnitt), vervierfacht sich die maximale Machbarkeit. Die maximale Machbarkeit kann also mit zwei Achsen dargestellt werden, einmal dem Raum, zum anderen der Zeit zugeordnet.

Die maximale Machbarkeit hat zwei Dimensionen, ist also eine Fläche.

Welche Menge der maximalen Machbarkeit wir nutzen bzw. nutzen wollen bleibt uns überlassen und liegt zwischen Null (= nichts tun) und maximaler Machbarkeit. Da die maximale Machbarkeit (höchster, kaum erreichbarer Wert) in einem Zeit-Raum-Element begrenzt ist, hat sie auch einen Wert, der nicht Null sein darf. Theoretisch würde dieser Wert gegen Null sinken, wenn eine der beiden Einheiten (Raum oder Zeit) gegen Null (durch Unendlich teilen) gesenkt werden würde.

Das heißt: keine der beiden Einheiten (Raum und Zeit) darf Null sein; somit können weder der Raum noch die Zeit unendlich teilbar sein.

Wir folgern daraus:

-  Es gibt eine kleinste Raumeinheit und auch eine kleinste Zeiteinheit, die nicht mehr teilbar sind.
-  Ein Zeit-Raum-Element hat sechs Dimensionen:
-  drei räumliche Achsen (X-, Y-, Z-)
-  zwei Machbarkeitachsen und
-  eine Zeitachse.

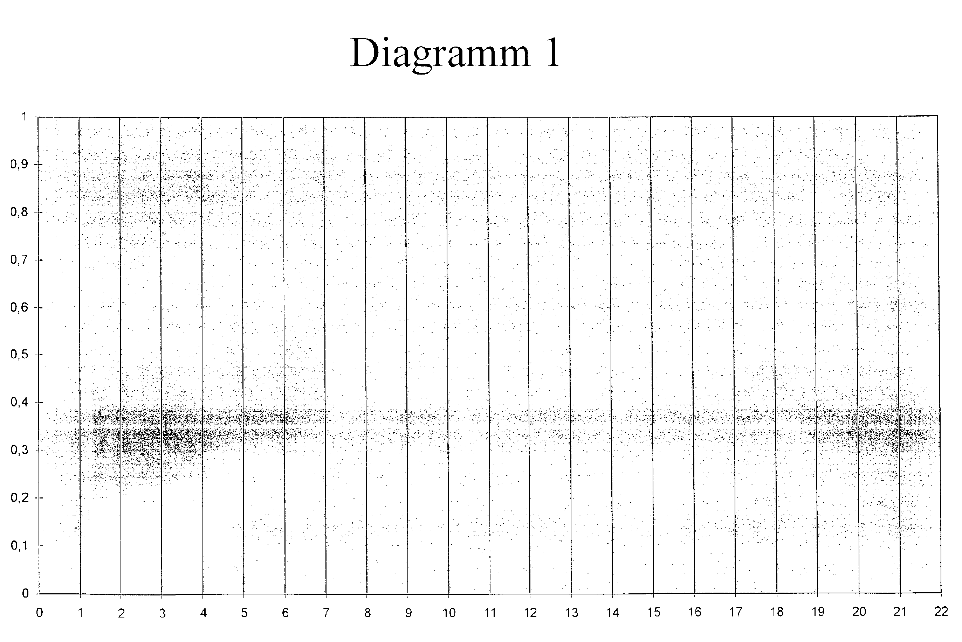

Wir trennen jetzt den Raum und die Zeit. Jeder behält sich jedoch seine eigene Machbarkeitsachse. Ab jetzt verfolgen wir nur die Zeit und ihre Machbarkeitsachse. Im Diagramm 1 sind horizontal eine Zeitachse und vertikal ihre Machbarkeitachse eingetragen. Die höchste Grenze der Machbarkeit haben wir auf 1.0 festgelegt.

Betrachten wir jetzt ein Beispiel. Auf einem Tisch liegt ein Gegenstand. Diesen tragen wir auf einen zweiten, 5 Meter entfernt stehenden Tisch. Dafür benötigen wir eine Sekunde. Wir erhöhen den Abstand der Tische auf 10 Meter und wir tragen unseren Gegenstand immer in einer Sekunde von einem Tisch zum anderen. Die Zeitspanne hat sich also nicht geändert. Wir haben aber bei der zweiten Gegenstandsübertragung mehr geleistet bzw. mehr getan als beim erstenmal.

Das kann nur so ausgelegt werden: wir haben bei der zweiten Übertragung doppelt soviel der Machbarkeit genutzt als beim erstenmal. Das ist aber alles was wir sagen können. Einen absoluten Wert können wir nicht nennen bzw. zuordnen.

Eine wichtige Erkenntnis haben wir jedoch gewonnen!

Die Zeit, die uns zur Verfügung steht, hat zwei Dimensionen:

> 1. die Machbarkeit, die nach oben begrenzt ist.
> 2. die Vergänglichkeit (die Zeitspanne).

Die Zeit ist also eine Fläche (Machbarkeit x Vergänglichkeit). In Zukunft werden wir von *Machzeit* für das zweidimensionale (zweiachsige) und von "Zeit" für die einachsige Dimension der Zeit sprechen.

Die *Machzeit* einer Sekunde hat immer eine gleich große Fläche.

Greifen wir unser Beispiel mit den beiden Tischen wieder auf.

Die Übertragung des Gegenstandes hat einen Verbrauch von *Machzeit* hervorgerufen. Würden wir die *Machzeit*-Fläche durch eine sehr kleine Zeitspanne dividieren, also die kleinstmögliche Zeitspanne benutzen (horizontal im Diagramm 1), würde die Machbarkeit gegen dessen Maximum steigen ( 1.0). Hätten wir vorher bei 5 Meter Abstand eine *Machzeit* von 0.1 gesetzt und bei 10 Meter Abstand eine *Machzeit* von 0.2 und jetzt die Zeitspanne auf 0.00001 Sekunden (kleinstmögliche Zeitspanne) reduziert, würde dies entsprechend eine Machbarkeit von 10000.0 bzw. 20000.0 ergeben. Hier wird deutlich, daß in unserem Beispiel (die Tische) die Machbarkeitsgröße sehr sehr kleine Zahlen sein müssen, da die Machbarkeit den Wert 1.0 nicht übersteigen darf.

Um konkrete Werte zu erhalten, sind wir den umgekehrten Weg gegangen.

Wir haben uns einen Gegenstand ausgesucht, der sehr schnell ist, und ihm haben wir den Wert 1.0 der Machbarkeit gegeben.

Dieser Gegenstand ist das Licht.

Das Licht dehnt sich mit sehr hoher Geschwindigkeit aus, es legt in einer Sekunde eine große Strecke zurück (299792458 m). Seine Geschwindigkeit wird mit "c" bezeichnet. Würden wir mit dieser Angabe (c) die Werte unserer Beispiele berechnen, erhalten wir, wie vermutet, tatsächlich sehr kleine Zahlenwerte.

Entsprechend unseres Diagramms 1 setzen wir "c" ein:

> Machbarkeit 1.0 $\times$ c = 299792458 m/s
> Machbarkeit 0.9 $\times$ c = 269813212 m/s
> Machbarkeit 0.8 $\times$ c = 239833966 m/s
> Machbarkeit 0.7 $\times$ c = 209854721 m/s
> Machbarkeit 0.6 $\times$ c = 179857575 m/s
> Machbarkeit 0.5 $\times$ c = 149896229 m/s
> Machbarkeit 0.4 $\times$ c = 119916983 m/s

> Machbarkeit 0.3 $\times$ c = 89937737 m/s
> Machbarkeit 0.2 $\times$ c = 59958492 m/s
> Machbarkeit 0.1 $\times$ c = 29979246 m/s
> Machbarkeit 0.0 $\times$ c = 0 m/s

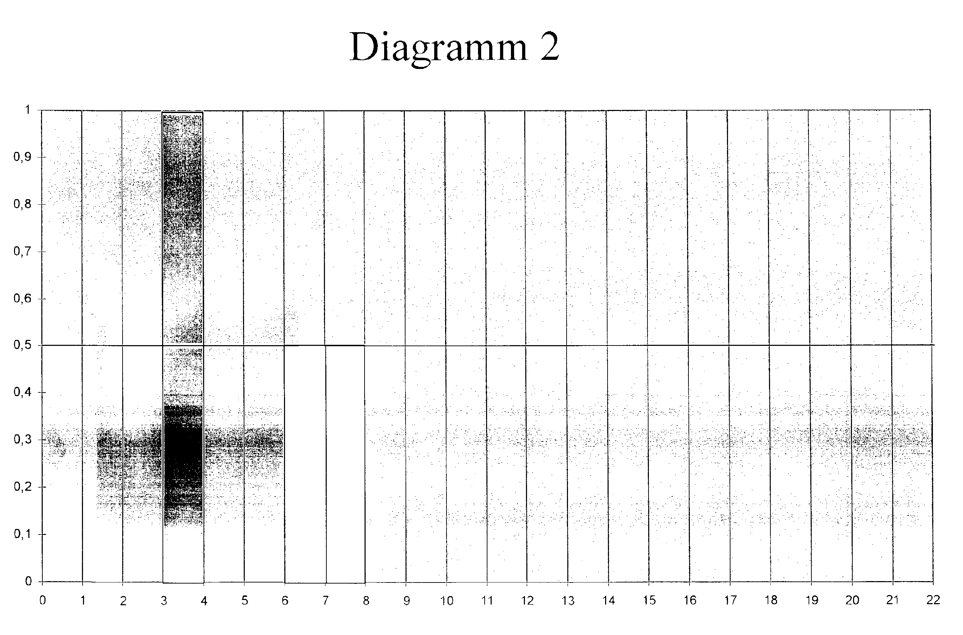

Im Diagramm 2 wurden ein Objekt, das mit 0.5 c (6. bis 8. Sekunde) sich fortbewegt, und das Licht einer Lichtquelle (3. bis 4. Sekunde) dargestellt. Beide Flächen sind gleich groß. Beide Objekte haben die gleiche Menge an *Machzeit* verbraucht. Beide Objekte haben die gleiche Strecke zurückgelegt. Die *Machzeit*-Fläche, die sich von Sekunde 6 und Machbarkeit 0.5 bis Sekunde 8 und Machbarkeit 1.0 erstreckt, ist unwiderruflich verloren. Die verbrauchte und unverbrauchte *Machzeit* kann nicht mehr zurückgewonnen werden.

Allein "Bewegung" verbraucht *Machzeit*.

Es folgt ein konkretes Beispiel!

Drei Objekte bewegen sich in folgenden Zuständen:

> 1. Objekt wird bewegt mit 0.2 c absolut
> 2. Objekt wird bewegt mit 0.5 c absolut
> 3. Objekt wird bewegt mit 0.8 c absolut

Jedes Objekt führt 3 Geschwindigkeitsmeßgeräte mit sich. Jeweils eines mißt seine eigene Geschwindigkeit, die anderen zwei die Geschwindigkeit der anderen beiden Objekte. Die Bewegung der Objekte verläuft parallel und in gleicher Richtung. Die Messung findet in dem Augenblick, in dem die drei Objekte in einer Linie stehen, statt.

Die oben angegebenen Geschwindigkeitsangaben sind aus der Sicht eines absolut stehenden Beobachters definiert.

Va = absolute Geschwindigkeit

Die absolute Geschwindigkeit ist eine Bewegung erster Ordnung. Sie hat als Referenz immer die Zeitachse eines stehenden Beobachters, d. h. Zeitachse 0.0 der Machbarkeit (später mehr darüber).

Vr = reale Geschwindigkeit bzw. die Geschwindigkeit, die ein Meßgerät anzeigt

Die reale Geschwindigkeit ist eine Bewegung höherer Ordnung. Sie hat als Referenz immer eine reale Zeitachse. Diese Zeitachse liegt immer über der 0.0 Zeitachsenpunkt der Machbarkeit (später mehr darüber).

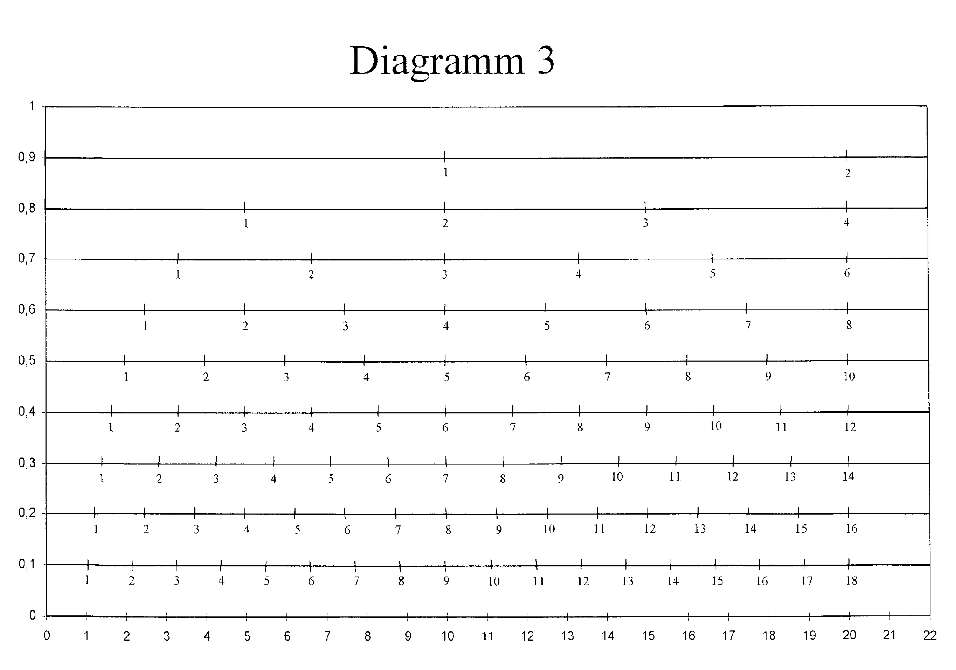

Pmz = Position im Mach-Zeit-Diagramm (siehe Diagramm 3)

Die Formel hierfür:

$$Vr = \frac{Va}{1 - Pmz}$$

Objekt 1 (0.2 c) mißt seine eigene Geschwindigkeit

$$Vr = \frac{0.2}{1 - 0.2} = 0.25 \text{ c}$$

Objekt 1 (0.2 c) mißt Objekt 2 (0.5 c)

$$Vr = \frac{0.5}{1 - 0.2} = 0.625 \ c$$

Objekt 1 (0.2 c) mißt Objekt 3 (0.8 c)

$$Vr = \frac{0.8}{1 - 0.2} = 1.0 \ c \qquad \text{(Lichtgeschwindigkeit !)}$$

Objekt 2 (0.5 c) mißt seine eigene Geschwindigkeit

$$Vr = \frac{0.5}{1 - 0.5} = 1.0 \ c \qquad \text{(Lichtgeschwindigkeit !)}$$

Objekt 2 (0.5 c) mißt Objekt 1 (0.2 c)

$$Vr = \frac{0.2}{1 - 0.5} = 0.4 \ c$$

Objekt 2 (0.5 c) mißt Objekt 3 (0.8 c)

$$Vr = \frac{0.8}{1 - 0.5} = 1.6 \ c \qquad \text{(1.6 x Lichtgeschwindigkeit !)}$$

Objekt 3 (0.8 c) mißt seine eigene Geschwindigkeit

$$Vr = \frac{0.8}{1 - 0.8} = 4.0 \ c \qquad \text{(4 x Lichtgeschwindigkeit !)}$$

Objekt 3 (0.8 c) mißt Objekt 1 (0.2 c)

$$Vr = \frac{0.2}{1 - 0.8} = 1.0 \ c \qquad \text{(Lichtgeschwindigkeit !)}$$

Objekt 3 (0.8 c) mißt Objekt 2 (0.5 c)

$$Vr = \frac{0.5}{1 - 0.8} = 2.5 \ c \qquad \text{(2.5 x Lichtgeschwindigkeit !)}$$

Alle hier berechneten Werte sind reale Geschwindigkeiten. Ein Geschwindigkeitsmeßgerät kann immer nur reale Geschwindigkeiten ermitteln bzw. anzeigen. Ein Geschwindigkeitsmeßgerät benötigt eine Zeitreferenz, um die Geschwindigkeit zu ermitteln. Diese Referenz ist die Zeitachse wo sich das Meßgerät befindet, die wiederum von der Bewegung (Geschwindigkeit), der das Meßgerät ausgesetzt ist, abhängig ist.

Eine Bewegung bedeutet *Machzeit* - Verbrauch.

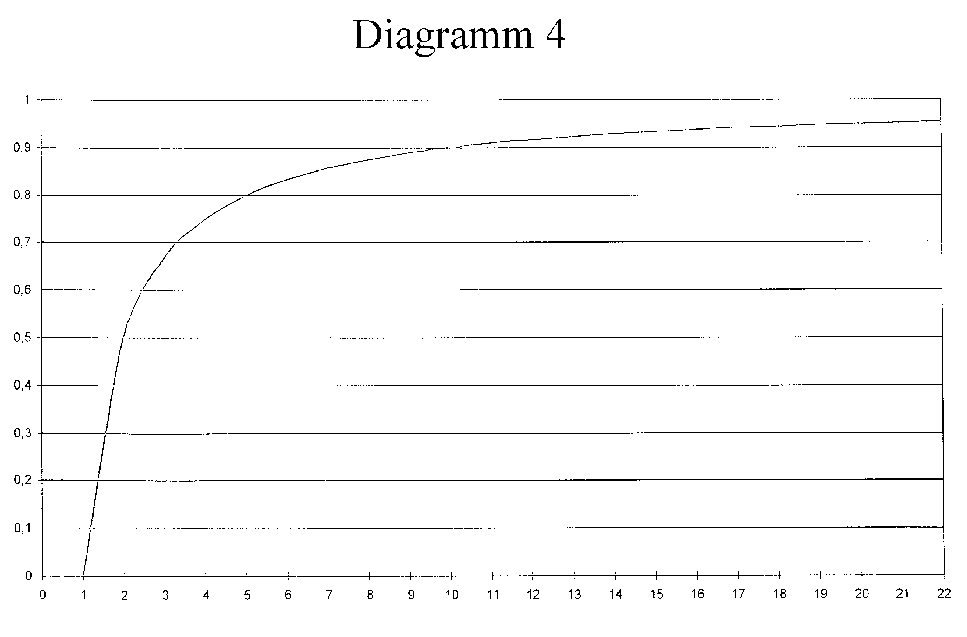

Die verbrauchte *Machzeit* hat das Meßgerät für seine Messung nicht mehr zur Verfügung. Die ihm zur Verfügung stehende *Machzeit* liegt zwischen 1.0 der Machbarkeit und seine Position in dem Zeit-Machbarkeits-Diagramm bzw. wo seine Zeitachse liegt. Jede *Machzeit*-Einheit hat gleichgroße Flächen (siehe Diagramm 3). Je mehr sich die Zeitachse eines Objektes der Machbarkeitsachse 1.0 nähert, bei gleichbleibender **Machzeit**-Fläche (z.B. eine Sekunde *Machzeit*), desto länger wird die Zeiteinheit (Zeitspanne). Hier wird es deutlich, daß bei höherer Geschwindigkeit eine Zeitdehnung stattfindet. Die Verbindung der Punkte stellt die Zeitlinie dar (siehe Diagramm 4).

Der Raum ist und bleibt eine Konstante!

Den Unterschied zwischen "absoluter Bewegung" und "realer Bewegung" wollen wir hier verdeutlichen.

Greifen wir unser Beispiel mit beiden Tischen wieder auf. Die zwei Bewegungen von 5 und 10 Meter sind reale Bewegungen, die Geschwindigkeiten von 5 und 10 m/s sind auch reale Geschwindigkeiten. Die Bewegungen wurden durchgeführt und die Geschwindigkeiten gemessen. Darüber gibt es keinen Zweifel. Jedoch, weder die Bewegungen noch die Geschwindigkeiten sind absolut, sie sind relativ zur Bewegung der Erde durchgeführt worden. Die Bewegung der Erde ist, in Relation zur Bewegung, die wir ausführen, ungeheuerlich hoch. Für viele Menschen kaum vorstellbar.

Die Realisierung einer absoluten Bewegung auf der Erde ist nicht möglich, nur reale Bewegungen bzw. Geschwindigkeiten. Da die Zeit-achse der Erde oberhalb der 0.0-Zeitachse liegt, weil die Erde immer in Bewegung ist und somit auch ein Punkt auf der Oberfläche, sind auf der Erde reale Geschwindigkeiten oberhalb der des Lichtes (c) meßbar (siehe die Formel für die Berechnung der realen Geschwindigkeit).

### Berechnung der absolute Geschwindigkeit der Erde

Ein Punkt auf der Erdoberfläche ist in Bewegung. Die absolute Geschwindigkeit ist unbekannt. Die bekannten Bewegungen sind am Äquator ca. 460 m/s und um die Sonne ca. 29 000 m/s. Allein diese Bewegungen ergeben, daß die Geschwindigkeit eines Punktes auf der Erdoberfläche nicht konstant ist. Für eine oberflächliche Berechnung von Geschwindigkeiten mag das wenig Bedeutung haben. Will man Energie bei höheren Geschwindigkeiten damit verrechnen bzw. darstellen, sieht das anders aus. Ein Beispiel! Ein Rechner arbeitet in einer eintausendfachen nach unten versetzten Zeitachse, wird aber mit Strom aus der normalen Zeitachse versorgt. Bei einem normalen Verbrauch von 200 Watt, muß der Rechner mit 200 KW versorgt werden.

Das gleiche Problem ergibt sich bei Energieberechnungen der Teilchenbeschleuniger. Hier werden sehr hohe Geschwindigkeiten erreicht. Die Energie wird anhand der Endgeschwindigkeit ermittelt. Sie erhält als Referenz die momentane (reale) Zeitachse des Punktes der Erdoberfläche, wo der Vorgang stattfindet. Welche Zeitachse gültig ist, ist wiederum abhängig von der dort herrschenden absoluten Geschwindigkeit. Wie oben erwähnt, ist diese Geschwindigkeit nicht konstant, so daß die Zeitachse irgendwo zwischen 0.0 und 1.0 (siehe Diagramm 3) der Machbarkeit liegen wird und pendelt je nach Geschwindigkeitsveränderung um einen unbekannten Betrag herauf und herunter. Das Verfahren für die Berechnung der absoluten Geschwindigkeit der Erde benutzt sechs oder sieben Atomuhren, die jeweils um 90° als Satelliten um oder mit der Erde kreisen. Von den sieben Uhren befindet sich eine auf der Erde. Diese Uhr gibt über Funk den Meßtakt. Das kann aber auch aus einer sich im Umlauf befindenden Uhr entnommen werden, so daß nur sechs Uhren benötigt werden.

**Wir klären das Verfahren bezogen auf eine Raumebene**

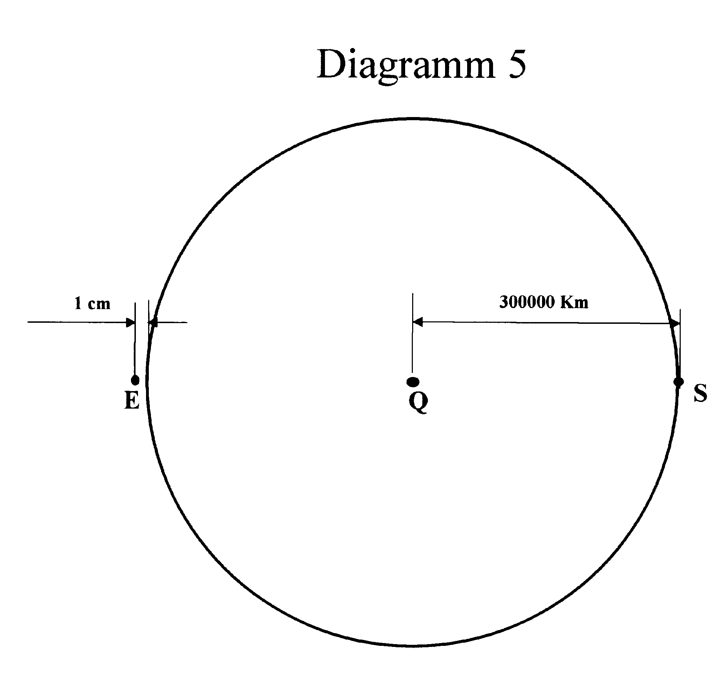

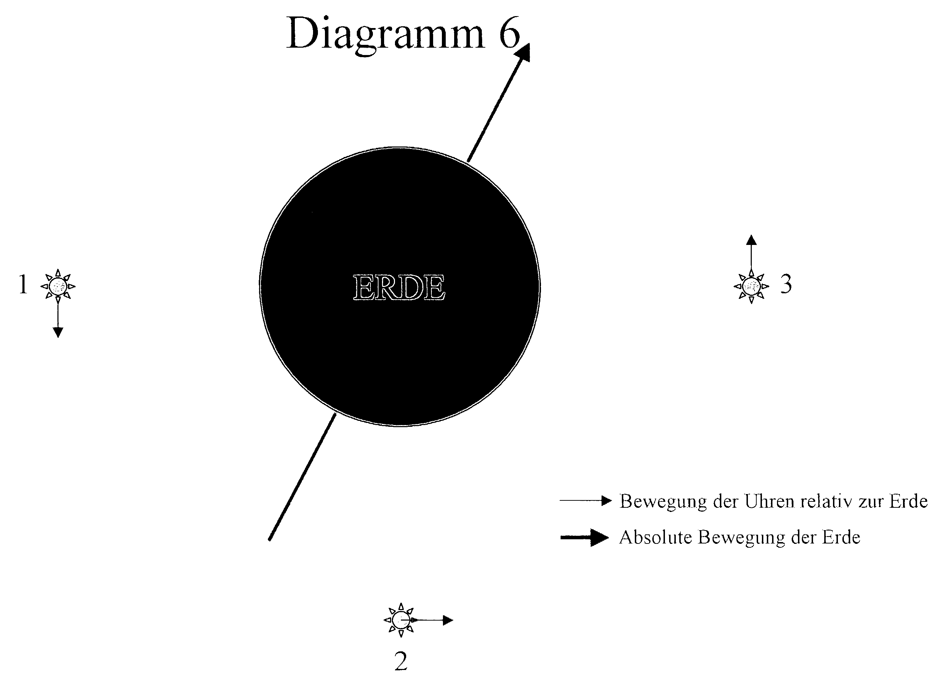

Für eine Raumebene werden drei Satellitenatomuhren benötigt (siehe Diagramm 6). Sie liegen in einer Ebene und sind vom Mittelpunkt der Erde jeweils um 90° angeordnet. Das heißt, sie bilden mit dem Mittelpunkt der Erde eine Ebene. Die Zähler dieser drei Uhren werden gleichzeitig von der mittleren Uhr (2) über Funk gestartet und nach einer Zeitspanne gleichzeitig gestoppt. Die Zeit der Zählung (eine Sekunde, 10 Sekunden oder mehr) wird so gewählt, daß ein Minimumfehler entsteht. Ist die Zeit zu lang, vergrößert sich der Fehler durch den kreisförmigen (nicht linearen) Bahnverlauf der Satelliten und zu kurze durch zu kleine Zahlenwerte der Zähler.

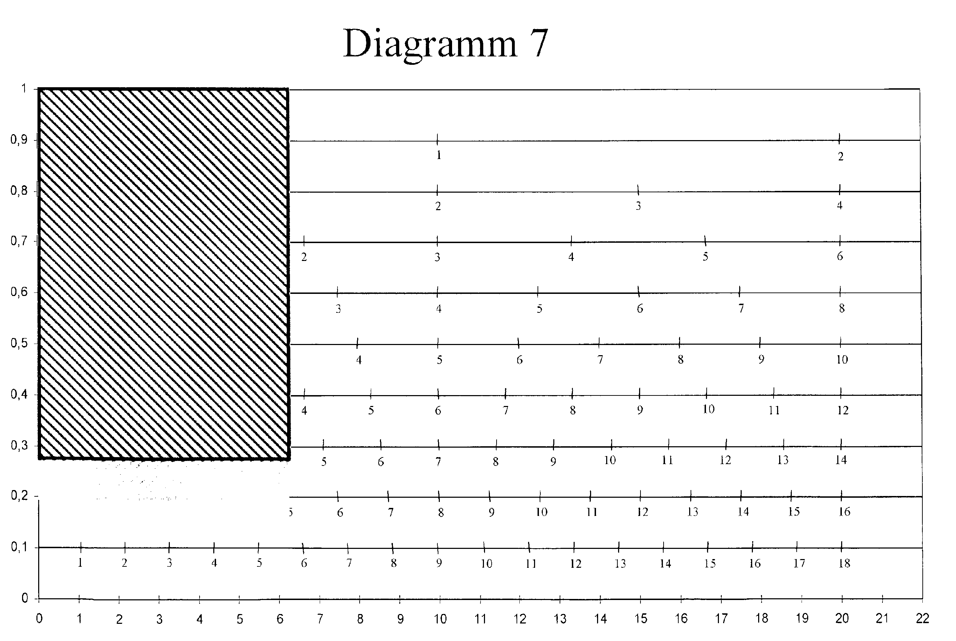

Die drei Zahlenwerte sind **Machzeit**-Flächen und werden in Diagramm 7 eingetragen. Diese drei Flächen mit einer Zeitspanne von 5 Sekunden (Zählzeit) bezogen auf die Zeitachse 0.2 (die Zeitachse 0.2 ist angenommen als aktuelle Bewegung der Erde) erstrecken sich von 1.0 der Machbarkeitsachse herunter bis zur jeweils eigenen Zeitachse der Uhren (liegen teilweise übereinander). Da die Zählzeit der Uhren gleich ist (Zähltakt), ist die Breite der drei Flächen auch gleich. Die Summe aller vektoriellen Bewegungen der Uhren ergibt die eigene absolute Geschwindigkeit. Diese steuert die Zählgeschwindigkeit der Uhren so, daß verschiedene Werte ausgegeben werden. Wenn die Breite der Fläche gleich bleiben muß, (eine Uhr gibt den Takt) werden die verschiedenen Flächenwerte verschiedene nach unten reichende Lagen haben.

Da eine **Machzeit**-Einheit immer eine gleichgroße Fläche hat, kann die Zeitabhängigkeit der Uhren zueinander berechnet werden. Am besten nimmt man den Zähler mit dem mittleren Wert als Referenz. Durch Teilen der Werte (Referenz / Wert) erhält man für die absolut schnellere Uhr einen Wert der > 1.0 ist und für die absolut langsamere einen Wert der <1.0 ist, während die Referenz = 1.0 ist. Diese berechneten Werte widerspiegeln die Abhängigkeit der Zeitachsen der Uhren zueinander, jedoch nicht deren Position (absolute Geschwindigkeit) in der Machbarkeitsachse.

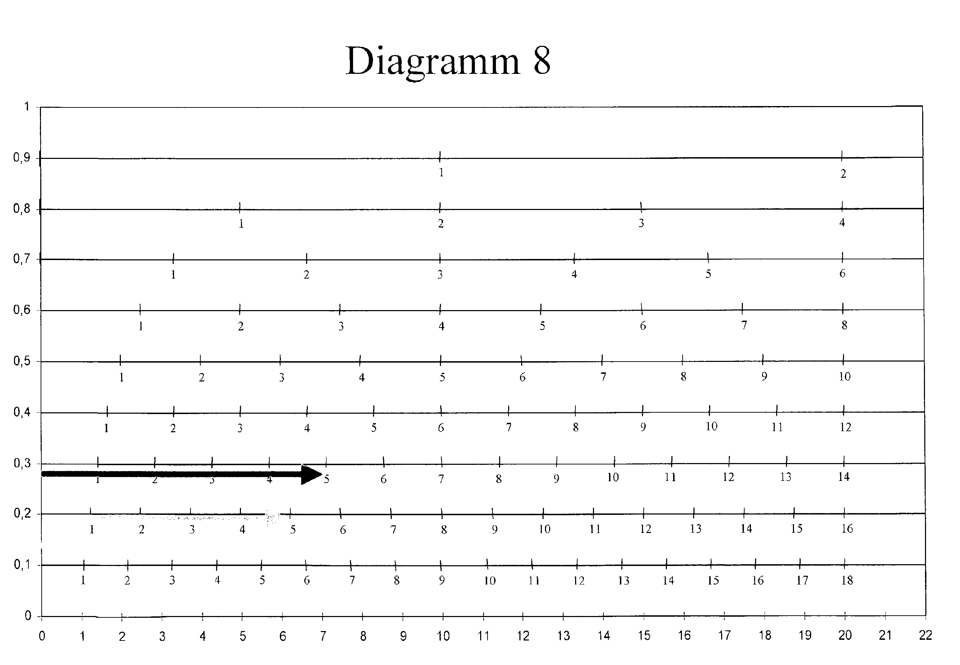

Im Diagramm 8 sind drei Werte als Pfeil für eine Taktzeit von 5 Sekunden eingetragen. Der untere Pfeil ist der absolut langsameren Satellitenuhr und der obere Pfeil der absolut schnelleren Satellitenuhr zugeordnet. Die Zeitachse des Mittelpunkts der Erde liegt genau zwischen diesen beiden, jedoch nicht ein Punkt auf der Erdoberfläche.

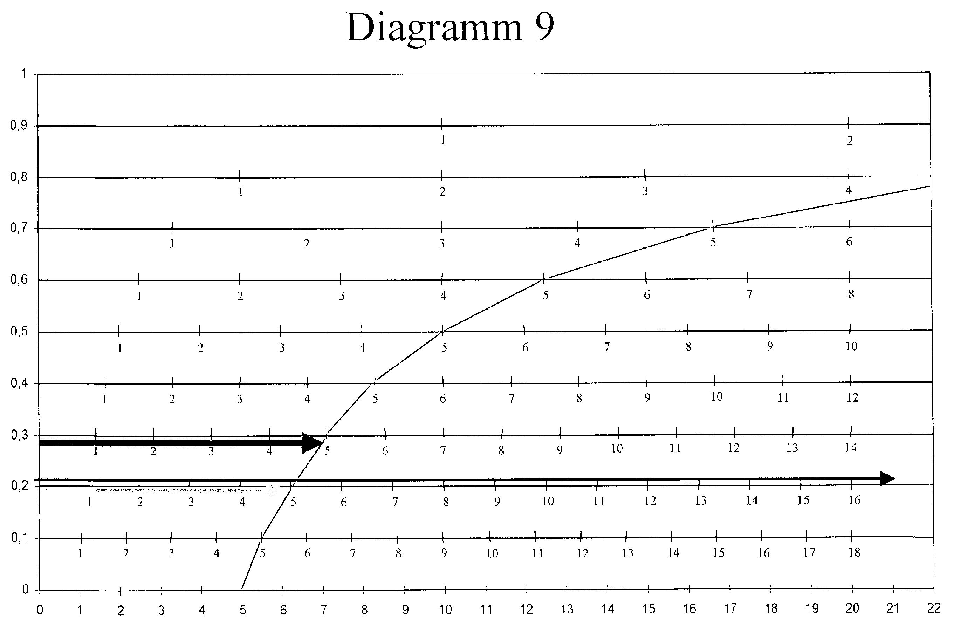

In Diagramm 9 ist die Zeitachse der Mittelpunkt der Erde, die Zeitachsen der 3 Satellitenuhren und die Zeitlinie für die 5 Sekunden der Zählzeit gezeichnet.

An Hand der **Machzeit**-Werte der Uhren und der berechneten Abhängigkeit kann die absolute Bewegungsrichtung auch ermittelt werden. Für die anderen zwei räumlichen Ebenen kann genau so verfahren werden, so daß die absolute räumliche Geschwindigkeit und die absolute räumliche Bewegungsrichtung ermittelt werden kann. Wichtig für uns ist nun zu wissen, wie weit von dieser Position abwärts der Zeitachse ein räumlich stehender Punkt auf der Machbarkeitsachse (siehe Diagramm 9) liegt. Würden wir diese Größe wissen, würden wir auch die absolute Geschwindigkeit kennen. Die mathematische Ableitung für diese Berechnung haben wir durchgeführt.

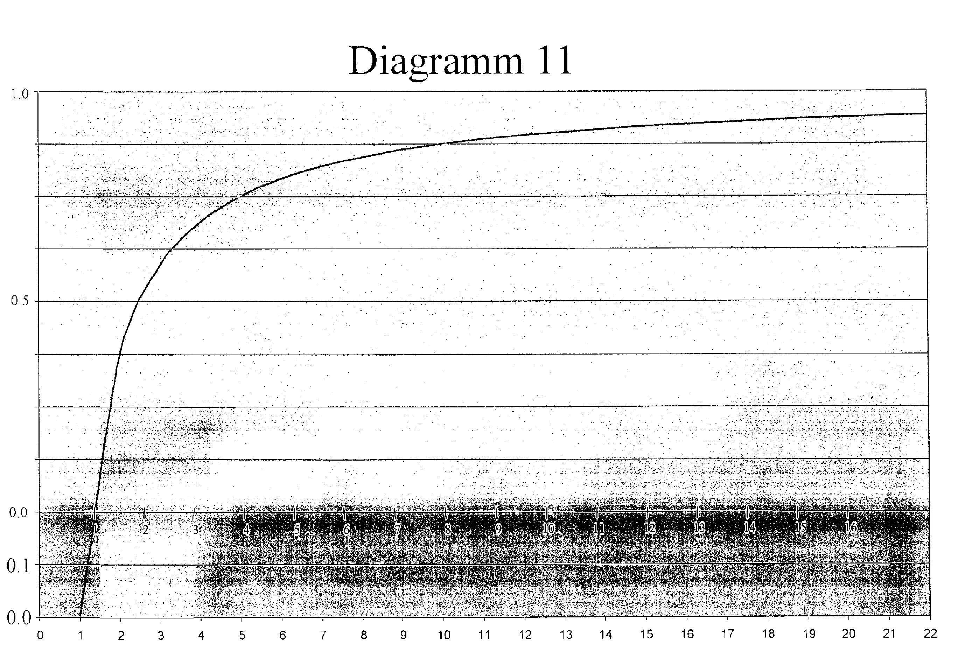

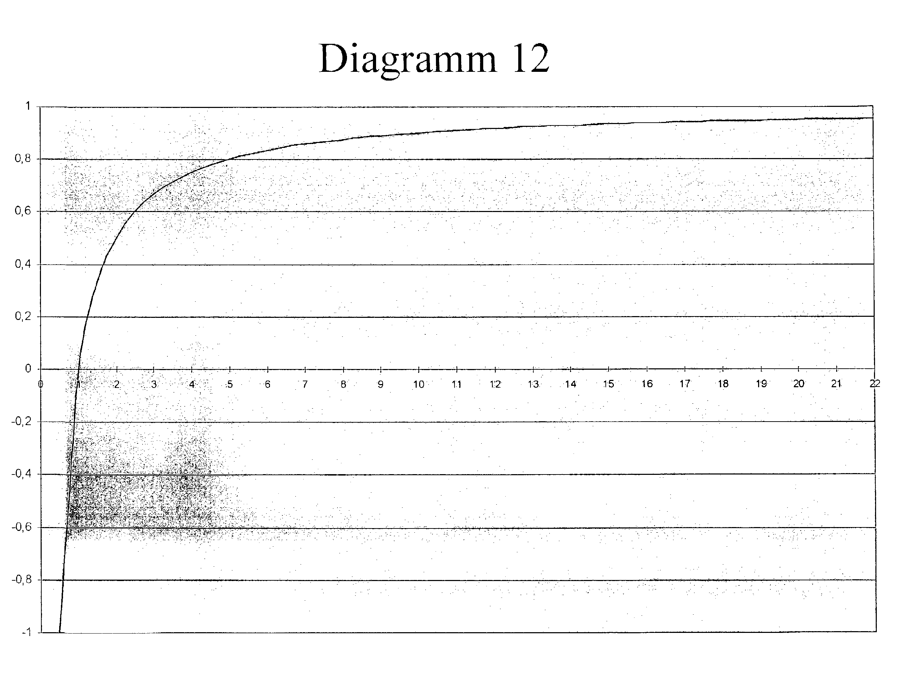

Überraschenderweise stellte sich heraus, daß die Geschwindigkeit der Erde (bzw. ein sich bewegender Punkt) nicht auf einen stehenden Punkt bezogen werden kann. Zuerst dachten wir auf einen Fehler in der Ableitung. Eine Prüfung ergab, daß die Ableitung in Ordnung ist, so daß die Lösung im **Machzeit**-Diagramm liegen muß. Wir haben die bei 0.2 der Machbarkeitsachse liegenden Zeitachse (siehe Diagramm 3) auf Null gesetzt und den oberen Bereich (0.8) in 10 Abschnitte unterteilt. Die Zeiteinheit (1.25) und die **Machzeit**-Fläche haben wir auf ihre Werte belassen (siehe Diagramm 11).

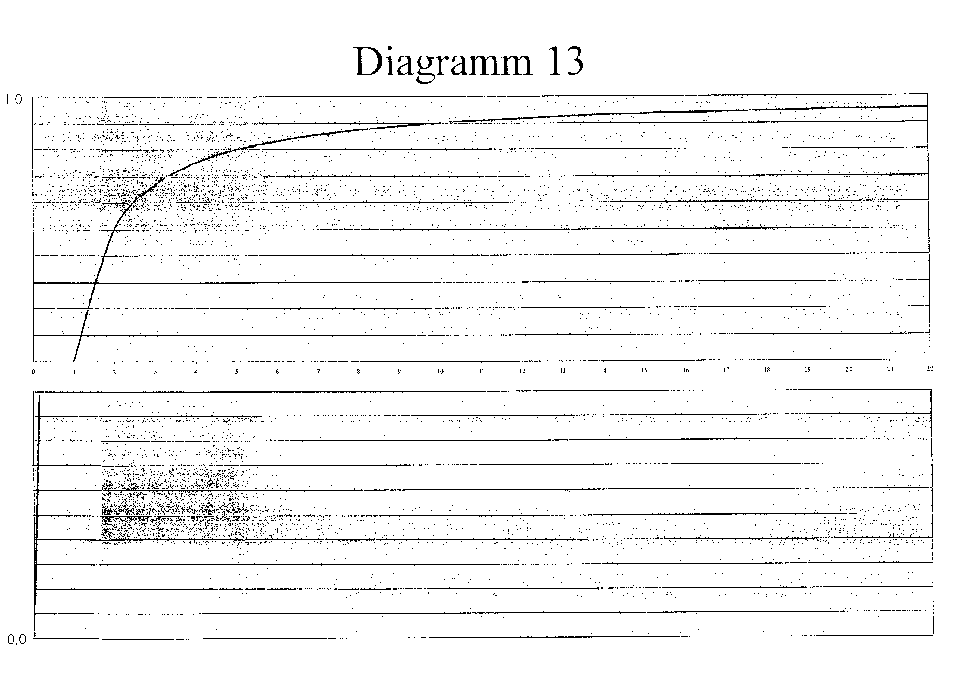

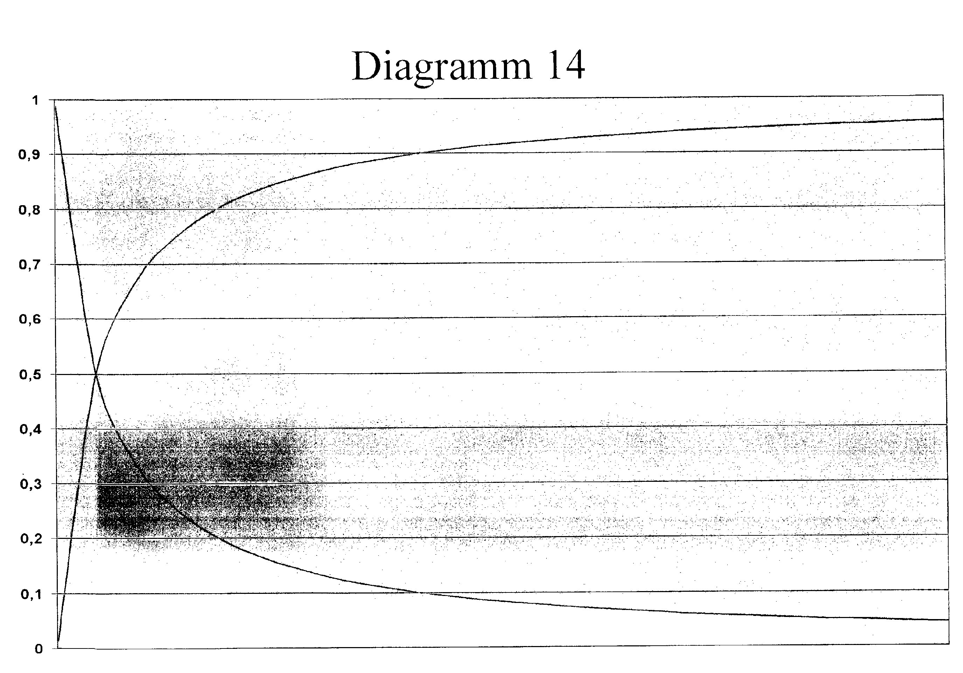

Alle Zahlenwerte fallen exakt auf die gleiche Zeitlinie (0.5 von Diagramm 11 ist gleich 0.6 von Diagramm 3). Die Belegung eines Nullpunktes bei 0.5 der Machbarkeit (Diagramm 3) und die Teilung der oberen Hälfte in 10 Teile würde die Zeitlinie auch nicht verändern (0.75 von Diagramm 3 ist gleich 0.5 dieser neuen Aufteilung). Eine Verlängerung des Diagramms 3 nach unten bis zur Machbarkeit (minus) -1.0 (siehe Diagramm 12) würde die Zeitlinie nicht verändern. Setzen wir jetzt diesen Punkt (-1.0) zu Null ergibt sich, daß der in Diagramm 3 angenommene stehende Punkt sich jetzt mit 0.5 c bewegt. Dieses Spiel können wir weiter fortsetzen. Es wird immer einen Punkt geben, der langsamer ist als der angenommene stehende (aber eigentlich nicht stehende) Punkt. Der von uns gesuchte stehende Punkt wird auf dem Schnittpunkt zwischen der senkrechten Achse (Machbarkeitsachse) und der Zeitlinie liegen (siehe Diagramm 13). Dieser Punkt liegt abwärts unendlich weit von der 1.0 Machbarkeitsachse entfernt. Wenn die Zeitlinie die Machbarkeitsachse schneidet, ist eine Dimension der Zeit zu Null gesetzt, so daß dieser Punkt die Dimension "Zeitspanne" nicht besitzt. Ein Vergleich bzw. ein Bezug eines Punktes mit Zeitspanne auf einen ohne Zeitspanne ist nicht möglich. Das erklärt auch die mathematische Ableitung.

Der Leser kann sich selber überzeugen, indem er die Ableitung auch durchführt. Ein Beispiel aus dem täglichen Leben. Wir haben 10 Tanks und es soll die Qualität des Benzins dieser Tanks geprüft werden. Festgelegt wird, daß der Tank Nummer 1 als Referenz dienen soll. Bei die Entnahme des Benzins für die Prüfung wird entdeckt, daß der Tank 1 trocken (leer) ist, so daß eine Referenz auf diesen Tank nicht möglich ist.

Die heutige Physik ist so ausgelegt, daß ein stehender Punkt soviel Zeitspanne besitzt wie es notwendig ist, entgegen der hier beschriebenen Ausführung.

Erschwerend ist noch die Tatsache, daß zwei oder mehr hintereinander durchgeführte Verfahren zur Ermittlung der absoluten Geschwindigkeit der Erde keinen Bezug zueinander haben, da der Zähltakt aus der realen Zeitachse, deren Position im *Machzeit*-Diagramm jeweils von der absoluten Geschwindigkeit abhängt, die wiederum nicht konstant und somit nicht definiert ist, entnommen wird. So ist der Zähltakt aus der Sicht eines absolut stehenden Beobachters immer willkürlich.

In diesem Abschnitt haben wir erfahren, daß das **Machzeit**-Diagramm zwei Extreme hat. Ein Extrem ist ganz oben, das andere ganz unten. Wird eines dieser Extreme erreicht, kann das nicht mehr rückgängig gemacht werden. Das heißt, die Zeitachsen 0.0 und 1.0 sind Zustände ohne Rückkehr, so daß Materie bzw. ein Objekt, welche in diesen Zustand versetzt werden, sich aus eigener Kraft nicht mehr befreien können. Der Grund: Um den eigenen Zustand zu verändern, muß *Machzeit* zur Verfügung stehen. Hier steht aber keine mehr zur Verfügung.

Ein anderer Aspekt liegt darin, daß die hier beschriebenen Referenzen nur von der oberen Zeitachse (Machbarkeit 1.0) ausgehen.
Die Zeitachse deutet auf Unendlichkeit hin, so daß in der Natur dieser Wert sehr genau definiert sein muß. Stattdessen ist eine Referenz auf der unteren Zeitachse nicht möglich, so daß dieser Wert (0) in der Natur nicht definiert ist.

Betrachten wir folgendes Beispiel:
    Null Raum = kein Raum
Diese Annahme ist unmöglich, sogar unser Gehirn weigert sich an einen Ort zu denken, an dem kein Raum vorhanden ist.

Das gleiche gilt auch für die Zeit.

Die Mathematik, mit der wir rechnen, ist genau umgekehrt ausgelegt:

    Null ist exakt definiert!
    Unendlich ist nicht definiert!

Das steht in krassem Unterschied zur Natur, die uns umgibt.

## Relative Bewegungen und relative Geschwindigkeiten

Relative Bewegungen und relative Geschwindigkeiten sind um einiges komplexer als absolute oder reale Bewegungen bzw.
Geschwindigkeiten, da sie mathematisch aus einer Zeitachse, die nicht ihre eigene ist, beschrieben werden sollen. Das entspricht einem Beobachter mit eigener reale Zeitachse und zwei Objekten mit jeweils eigenen reale Zeitachsen.

## Absolute Beschleunigungen

Beschleunigungen mit positivem oder negativem Verlauf werden nur durch Kräfte auf Materie hervorgerufen. Hätten wir eine Kraft ohne Materie, könnten wir keine Beschleunigungen erzeugen. Da die Erde immer in Bewegung ist, sind hier absolute Beschleunigungen weder realisierbar noch meßbar.

## Reale Beschleunigungen

Reale Beschleunigungen mit positivem oder negativem Verlauf werden nur durch Kräfte auf Materie hervorgerufen. Kräfte haben eine Wirkung auf Materie. Die heutige Physik betrachtet eine Kraft und deren Wirkung als dasselbe. Das nehmen wir jetzt unter die Lupe an Hand der Anziehungskraft von Planeten.

Zuerst aber etwas Grundsätzliches! Eine Kraft wirkt auf Materie nur, wenn *Machzeit* zur Verfügung steht. In anderen Worten: damit eine Kraft auf Materie wirkt, benötigt sie *Machzeit*. Eine Zeitspanne allein reicht nicht aus. Das heißt, befindet sich Materie bereits bei absoluter Lichtgeschwindigkeit, hat eine Kraft, gleichgültig welcher Größe, auf diese Materie keine Wirkung. Ein mitgeführtes Geschwindigkeitsmeßgerät würde nach der Vr-Formel (siehe auch im nächsten Abschnitt) eine unendliche Geschwindigkeit anzeigen, so daß eine weitere Beschleunigung außerhalb jeder Logik liegt.

In einem Teilchenbeschleuniger auf der Erdoberfläche werden reale Geschwindigkeiten mit der dort geltenden Zeitachse gemessen. Diese können - wir haben es bereits weiter oben erklärt - durchaus über "c" sein. Erreicht die Materie in der Beschleuniger die absolute Geschwindigkeit "c", gleichgültig, welche reale Geschwindigkeit das Meßgerät auf der Erde anzeigt, läßt sich die Materie nicht mehr beschleunigen. Im Diagramm 14 ist die Zeitlinie an Hand der Vr-Formel und der Verlauf der Wirkung einer Kraft auf Materie abhängig von der absoluten Geschwindigkeit (senkrechte Achse). Waagrecht ist die Wirkung dieser Kraft dargestellt.

Merkwürdigerweise zeigt dieses Diagramm, je mehr die Geschwindigkeit der Materie abnimmt, desto höher ist die Wirkung der Kraft. Das Vorhandensein dieses Zustands scheint bereits bestätigt zu sein, konnte aber nicht eindeutig geklärt werden. Diese Materie hat ihre Zeitachse sehr nahe der 0.0 Position der Machbarkeitsachse, also eine sehr geringe absolute Geschwindigkeit.

Das heißt die Stärke einer Gravitationskraft ist nicht nur von der Volumen der Masse abhängig, sondern auch von der absoluten Geschwindigkeit der Materie.

**Zurück zur Vr-Formel**

Betrachten wir jetzt die Zeit-Achse 1.0 (oberste Zeit-Achse) nach folgender Formel:

$$Vr = \frac{Va}{1 - Pmz} = \frac{Va}{1 - 1} = \text{unendlich}$$

Wird also ein übergeordneter Vorgang auf dieser Zeitachse durchgeführt, geschieht das mit unendlicher Geschwindigkeit.

Es folgt ein einfaches Beispiel (siehe Diagramm 2). Ein Gedanke bewegt ein Objekt. Der Gedanke benötigt bzw. verbraucht, wie das Licht auch, die gesamte zur Verfügung stehende *Machzeit* (Diagramm 2 Sekunden 3-4), so daß für seine Tat (die Bewegung des Objektes), trotz vorhandene Zeitspanne, keine *Machzeit* zur Verfügung steht. Das Objekt muß sich mit unendlicher, realer Geschwindigkeit bewegen. Das entspricht der Wahrheit.

Wir sind wohl in der Lage, das gedachte Objekt mit niedriger Geschwindigkeit fliegen zu lassen, jedoch benötigen wir eine größere Zeitspanne (Diagramm 2 Sekunde 6-8). Die Arbeit des Gedankens ist aber die gleiche, also auch gleiche *Machzeit (Fläche)*. Nun hat unser Objekt die *Machzeit* zwischen 0.5 und 1.0 zum Fliegen zur Verfügung. Somit kann es mit niedrigerer Geschwindigkeit als Unendlich fliegen.

Das Licht bzw. die Strahlung benutzt die Zeitachse 1.0 um sich fortzubewegen. Licht oder Strahlung transferiert Energie bzw. Licht übt Energietransfer aus, heißt es. Ein Vorgang auf dieser Zeitachse wird, wie oben mathematisch ermittelt, mit unendlicher, realer Geschwindigkeit ausgeführt. Also, Strahlungsenergie wird erst transferiert, wenn das Licht auf die Materie aufprallt. Exakt in diesem Augenblick findet mit unendlicher realer Geschwindigkeit der Energietransfer statt.

Die Folgerung aus dieser Erkenntnis lautet:

1. Strahlung ist kein Energie !
2. Das Licht hält sich an die zu Beginn dieses Schreibens dargestellte Regel "Energie außerhalb der Materie gibt es nicht".

Mit dieser Regel allein ist eine Rechtfertigung dieses Vorgangs nicht haltbar. Die Methode, womit das Licht die Energie transferiert, muß begründet sein.

Im Laufe der Menschheitsgeschichte wurde auch die Einheit "Energie" eingeführt, ohne sich Gedanken darüber zu machen, ob diese auch in der Natur vorliegt.

Licht liegt in der Natur vor!
Materie liegt in der Natur vor!

Bewegung liegt in der Natur vor!
Raum liegt in der Natur vor!
usw.

Wenn wir annehmen, daß Energie in der Natur nicht vorkommt, dann kann das Licht, weder mit sich (wie bisher angenommen), aber auch nicht im Augenblick seiner Ankunft, transferieren. Das würde einen Teil des Lichtverhaltens erklären. Aber dadurch entsteht ein neues Problem.

Welche unbekannte Einheit wird vom Licht mit unendliche reale Geschwindigkeit transferiert ?

Da das Licht ein Naturphänomen ist liegt die Vermutung nahe, daß das Licht eine in der Natur vorhandene Einheit mit unendlicher reale Geschwindigkeit transferiert. Wir gehen minutiös vor und legen Schritt für Schritt fest, was das Licht dabei tut:

1. Das Licht kommt immer und nur aus der Materie heraus.
2. Das Licht beendet seinen Weg immer und nur in der Materie.

Wir wollen uns jetzt mit der Materie beschäftigen. Je heißer die Materie ist, desto mehr strahlt sie, aber je heißer die Materie ist, desto weniger inneren Halt besitzt sie. Je kühler die Materie ist, desto weniger strahlt sie, aber umso mehr inneren Halt besitzt sie. Wir stellen uns jetzt zwei Kugeln vor, die durch ein gespanntes Seil verbunden sind. Die zwei Kugeln stellen zwei Materienteilchen und das Seil die Verbindung der Teilchen dar, die wir

Mv = Materienvektor

nennen.

Wird der Materienvektor von eine Lichtwelle getroffen, wird er, sagen wir, "vernichtet" und die Materienteilchen haben keinen Halt mehr.

Betrachten wir jetzt das gesamte System. Ein Materienstück mit wenig Materienvektoren (hohes Temperatur) sendet Lichtwellen. Trifft eine Lichtwelle auf ein Materienstück mit mehr Materienvektoren (niedrige Temperatur), dann wird dort ein Materienvektor "geraubt" und an den Ursprung des Lichtwelle gesetzt.

Welcher Materienvektor (Mv) transferiert wird, kann während der Ausbreitung des Lichtes nicht bestimmt werden, außer im Augenblick des Aufpralls der Lichtwelle auf die Materie.

Die exakte Auslegung lautet: zwei Materienteilchen, die ohne Verbindung sind, also keinen Materienvektor (Mv) besitzen, versuchen ihren Zustand zu stabilisieren, in dem sie sich einen Materienvektor (Mv) suchen. Der Suchvorgang wird durch das Senden einer Lichtwelle gestartet.

Trifft die Lichtwelle einen Materienvektor, ergeben sich zuerst zwei Möglichkeiten:

Regel 1

Der getroffene Materienvektor ist kürzer bis gleich als der fehlende, der die Lichtwelle gesendet hat. In diesem Fall wird die angetroffene Lichtwelle abgelenkt. Der Suchvorgang läuft weiter. Es wird kein Mv-Transfer ausgeführt.

Regel 2

Der getroffene Materienvektor ist länger als der fehlende, der die Lichtwelle gesendet hat. Der Materienvektor wird transferiert.

Materienvektoren befinden sich in:

- kristallinen Verbindungen (sehr lange Mv)
- molekularen Verbindungen (mittel lange Mv)
- atomaren Verbindungen (lange bis kurze Mv)
- Atomkern-Verbindungen (kurze bis sehr kurze Mv)

Nur die Länge eines Mv verändert sich, seine Einheit ist überall gleich. Rein theoretisch könnten alle Materienvektoren gegeneinander getauscht werden. Die oben erwähnten Regeln aber erschweren den Austausch.

Zwei weitere Voraussetzungen spielen zusätzlich beim Mv-Transfer eine wichtige Rolle;

- der Winkel zwischen der Ausbreitungsrichtung der Lichtwelle und des Materienvektors;
- die absolut herrschende Geschwindigkeit zwischen der Materie, die das Licht sendet, und der Materie, die das Licht empfängt.

Dies führt zu folgenden Regeln:

Regel 3

Je flacher der Winkel zwischen der Ausbreitungsrichtung der Lichtwelle und des Materienvektors ist, desto kürzer erscheint der Materienvektor und so unwirksamer wird die Lichtwelle.

Regel 4

Je niedriger die absolut herrschende Geschwindigkeit zwischen der Materie, die das Licht sendet, und der Materie, die das Licht empfängt, ist, desto unwirksamer wird die Lichtwelle.

Hier wird deutlich, daß auch bei Atomkernspaltung bzw. -fusion keine Materie vernichtet, sondern nur ihr Zustand verändert wird, in dem vollkommen neue Teilchenverbindungen entstehen. Diese neuen Materienverbindungen können mehr, aber auch weniger Materienvektoren fassen. Faßt der neue Materienzustand mehr Mv als vorher, dann erhitzt sich die Materie schlagartig mit allen dazugehörigen Erscheinungen. Faßt der neue Materienzustand weniger Mv als vorher, dann kühlt die Materie schlagartig ab mit ebenfalls allen dazu gehörigen Erscheinungen.

Die Länge des kleinsten fehlenden Materienvektoren enthält die direkte Aussage über die Temperatur der Materie.

Je kürzer der fehlenden Materienvektoren ist desto höher ist die Temperatur der Materie. Licht, das aus kürzeren fehlenden Mv entsteht oder exakter ausgedrückt "Materie, der atomaren oder Atomkern-Verbindungen fehlen", also sehr kurze fehlende Mv, ist nicht "energiereicher" als anderes Licht. Es findet schneller in der Materie der Umgebung einen zum Transferieren passenden Mv. Das vermittelt nur den Eindruck, "energiereicher" zu sein.

Zurück zu unserem Problem .......

Eine Lichtwelle wird von der Quelle bis zum Ziel des Lichtes gesendet, dabei wird ein Materienvektor transferiert, wobei dieser aber vom Ziel zur Quelle versetzt wird. Dabei darf nicht vergessen werden, daß die Quelle des Lichtes abkühlt und das Ziel erhitzt wird bzw. die Materie der Quelle des Lichtes seinen internen Halt verbessert, während die Materie des Ziel des Lichtes verschlechtert.

Nun ist es klar, warum die Natureinheit, die vom Licht transferiert wird, mit unendlicher, realer Geschwindigkeit (reale Geschwindigkeit, weil das Licht mit der an seinen Ursprung geltenden Zeitachse erzeugt wurde) transferiert wird. Es gibt nur diese Möglichkeit, dies durchzuführen.

Der Grundsatz des Materienvektor-Transfers findet Gültigkeit auch in anderen Bereichen der Physik.

Beim Versuch, das hier beschriebene Verhalten mit wissenschaftlichen Experimenten zu bestätigen, war nicht nur erfolgreich, sondern es wurde auch festgestellt, daß der Materienvektor-Transfer als

Informations- bzw. Daten-Transfer

mit realer, unendlicher Geschwindigkeit genutzt werden kann.

Durch Senden einer konstanten Welle (es stehen mehrere zur Verfügung) mit der Ausbreitungsgeschwindigkeit ‚c', also mit Nutzung der Zeitachse 1.0, wird dieses Prinzip realisiert.

Hier ein Beispiel:

Wir haben eine Metallfolie mit großen Ausmaßen zur Verfügung (eine Million Kilometer beide Kantenlängen). In der Mitte ist ein elektrischer Anschluß (Q) angebracht. Wird an diesen Anschluß eine elektrische Spannung angelegt, dann breitet sich die Spannung ringförmig um den Anschluß mit annähernder Lichtgeschwindigkeit aus und erzeugt eine Welle (Spannungswelle) mit Nutzung der Zeitachse 1.0. In einem Abstand von 300 000 km von (Q) ist ein zweiter elektrischer Anschluß (S) angebracht und gegenüberliegend in einem Abstand von 300 000 km plus ein cm von (Q) ein dritter (E) (siehe Diagramm 5). Wurde die Spannungswelle in (Q) durch Einspeisung von 10 Elektronen erzeugt und beim Eintreffen der Welle in (S) 10 Elektronen herausgenommen, kann (E) keine Elektronen empfangen. Nimmt (S) vier Elektronen heraus, empfängt (E) sechs Elektronen. Was (E) empfängt, wird über (S) gesteuert. Die Übertragungsgeschwindigkeit kann der Leser selber ausrechnen. Selbstverständlich ist diese Methode auch auf ein elektrisches Kabel (Kanalisierung einer Welle) anwendbar. An Stelle einer ringförmigen Spannungswelle werden zwei Spannungspunkte, die sich links und rechts von (Q) entfernen, erzeugt.

Das gerade für die elektrische Spannung beschriebene Prinzip gilt auch für das Licht. Der einzige grundsätzliche Unterschied ist, daß die elektrische Spannung sich auf Materie ausbreitet, während Licht sich im leeren Raum ausbreitet. Der Leser wird jetzt sagen: "Es gibt aber lichtdurchlässige Materie!". Wir betrachten als Licht das gesamte Lichtspektrum. Eine lichtdurchlässige Materie läßt nur einen geringen Teil des gesamten Lichtspektrums durch, sodaß die oben erwähnte Regel allgemein gültig ist. Einen zweiten Aspekt dieser Betrachtung möchten wir noch erwähnen: elektrische Spannung ist keine Energie, somit ist, wie schon weiter oben bereits nachgewiesen, Licht auch keine.

Der Nachweis, daß ein Photon (Lichtwelle) sich im leeren Raum ringförmig ausbreitet, das heißt, daß er in unzähligen Orten gleichzeitig vorzufinden ist, kann mit der heutigen Technik nicht erbracht werden. Wird ein Photon in einem Ort nachgewiesen, ist er auch vernichtet. So kennt die heutige Physik nur in einer Richtung kanalisiertes Licht, und zwar in die Richtung, in der das Photon vernichtet bzw. nachgewiesen wurde.

Das Prinzip der Daten- bzw. Informations-Übertragung mit unendlicher Geschwindigkeit durch Licht ist sehr einfach. Man erzeugt nicht kanalisiertes Licht (Photonenwellen) oder man spaltet (Polarisierung) bereits kanalisiertes Licht einer Lichtquelle (Q). Während ein nicht kanalisiertes Licht annähernd einer elektrischen Spannung auf einer Metallfolie entspricht, gleicht polarisiertes Licht einer elektrischen Spannung auf einem elektrischen Kabel. Diese Vorgänge veranlassen unsere Einheit - Licht einer Lichtquelle (Q) - gleichzeitig an mindestens zwei verschiedenen, jedoch bekannten Orten zu sein. An einem Ort befindet sich der eigentliche Sender (S), am anderen der Empfänger (E).

Der Materiezustand des Senders wird wechselseitig so geändert, daß die Lichtquelle an dieser Materie einmal Materienvektoren holen kann, einmal nur einen Teil, einmal gar keinen. Die Materie der Empfänger ist so ausgelegt, daß immer Mv dort geholt werden können. Da der Empfänger sich ein winziges Stück entfernter von der Lichtquelle befindet als der Sender, kann die Lichtquelle von dort nur die Materienvektoren holen, die aus dem Sender nicht geholt wurden.

Werden von der Lichtquelle alle Materienvektoren vom Sender geholt, heißt das z.B. "sende 0", weil keine Materienvektoren mehr vom Empfänger geholt werden können. Werden keine Materienvektoren vom Sender geholt, weil der Materiezustand dort das nicht zuläßt, dann heißt es "sende 1". Die Materienvektoren werden somit vom Empfänger geholt. Die Steuerung liegt nur beim Sender.

## Neue Grundlage der Materienforschung

Atomare Verbindungen wie $H_2O$ (Wasser) oder NaCl (Salz) kommen zustande, weil zwei H-Atome jeweils ein Elektron mit einem O-Atom bzw. ein Na-Atom ein Elektron mit einem Cl-Atom gemeinsam benutzen. So lautet die heutige Auslegung der Physik. Wir wissen ja, daß das Entstehen solcher Verbindungen von Wärme begleitet wird. Wärme heißt: es wurden eine gewisse Anzahl der Mv-Plätze neu erzeugt. Die fehlenden Mv werden dann aus der Materie der Umgebung geholt. Wir gehen davon aus, daß solche Verbindungen jeweils eine immer exakte und konstante Anzahl von neuen Mv erzeugen. Diese Zahl steht in keinem Zusammenhang mit der Anzahl der gemeinsam benutzten Elektronen. Aber nicht nur die Anzahl der Mv ist konstant, sondern auch deren kleinste mögliche erzeugte Länge, so daß die maximale erzeugte Temperatur auch konstant ist. Würden wir diese Zahl bei mehreren solcher Verbindungen kennen, wären wir in der Lage, die Materie, ihren Aufbau und die Teilchenverbindungen, besser zu verstehen und diese somit für uns einen größeren Nutzen bringen.

## Patentansprüche

1.  Die Formel $Vr = \frac{Va}{1 - Pmz}$ auch in umgestellter Form.

2.  Die Nutzung bzw. die Vermarktung von Geschwindigkeitsmeßgeräte, die die reale Geschwindigkeit messen.

3.  Die Zeit als zweidimensionales Element (***Machzeit***).

4.  Das Zeit-Raum-Element als sechsdimensionales Element.

5.  Die Natureinheit "Materienvektor", ihre Einheit und ihre Länge.

6.  Die vier Regeln des Materienvektor - Transfers.

7.  Daß die absolute Geschwindigkeit die Wirkung einer Kraft beeinflußt.

8.  Daß Bewegung ***Machzeit*** - Verbrauch bedeutet.

9.  Die neue Grundlage der Materien - Forschung.

# Diagramm 1

EP 1 047 181 A1

# Diagramm 2

# Diagramm 3

EP 1 047 181 A1

# Diagramm 4

EP 1 047 181 A1

Diagramm 5

# Diagramm 6

1

ERDE

3

2

→ Bewegung der Uhren relativ zur Erde

➡ Absolute Bewegung der Erde

EP 1 047 181 A1

# Diagramm 7

EP 1 047 181 A1

# Diagramm 8

EP 1 047 181 A1

# Diagramm 9

EP 1 047 181 A1

# Diagramm 11

# Diagramm 12

EP 1 047 181 A1

# Diagramm 13

Diagramm 14

EP 1 047 181 A1

**Europäisches Patentamt**

## EUROPÄISCHER RECHERCHENBERICHT

Nummer der Anmeldung

EP 99 10 7359

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | Peter James Carroll, "Hyperwarp 6D" 'Online! Retrieved from the Internet: <URL: http://dialspace.dial.pipex.com/town/street/aci50/hyperwarp6d.htm> 10 September 99 XP002115811 * das ganze Dokument * | 1-9 | H02N11/00 |
| X | EP 0 896 446 A (SCHROLL EGIDIO) 10. Februar 1999 (1999-02-10) * das ganze Dokument * | 1-9 | |
| X | DE 39 08 441 A (POISEL OTTO KARL) 27. September 1990 (1990-09-27) * das ganze Dokument * | 1-9 | |

RECHERCHIERTE SACHGEBIETE (Int.Cl.7)

H02N

Der vorliegende Recherchenbericht wurde für alle Patentansprüche erstellt

| Recherchenort | Abschlußdatum der Recherche | Prüfer |
|---|---|---|
| DEN HAAG | 17. September 1999 | Ramos, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 10 7359

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-09-1999

| Im Recherchenbericht angeführtes Patentdokument | Datum der Veröffentlichung | Mitglied(er) der Patentfamilie | Datum der Veröffentlichung |
|---|---|---|---|
| EP 0896446 A | 10-02-1999 | KEINE | |
| DE 3908441 A | 27-09-1990 | KEINE | |

Für nähere Einzelheiten zu diesem Anhang : siehe Amtsblatt des Europäischen Patentamts, Nr.12/82